# EUROPEAN PATENT APPLICATION

(11) **EP 4 574 474 A1**
(43) Date of publication of application: **25.06.2025**
(21) Application number: 24215692.5
(22) Date of filing: 27.11.2024
(51) Int. Cl.: B60G 17/0165

(54) **PROVIDING ADAPTIVE GROUND CLEARANCE OF A VEHICLE**

(30) Priority: 22.12.2023 US 202318393968
(71) Applicant: Volvo Car Corporation, 405 31 Göteborg (SE)
(72) Inventor: Eriksson, Robert, SE-405 31 Göteborg (SE); Härsjö, Joachim, SE-405 31 Göteborg (SE)
(74) Representative: Nederlandsch Octrooibureau

(57) **Abstract**

A method for providing adaptive ground clearance of a vehicle. The method includes capturing data on an external environment using at least one camera positioned at an exterior portion of the vehicle, where the data on the external environment includes data on a ground surface on a path of the vehicle. The method further includes detecting at least one object in the path of the vehicle based on the data that is captured. The method further includes estimating an object height of the at least one object. The method further includes adjusting a ground clearance height of the vehicle based on an estimated object height of the at least one object in response to the estimated object height being greater than the ground clearance height of the vehicle such that an adjusted ground clearance height of the vehicle is greater than the estimated object height.

## Description

### INTRODUCTION

The present disclosure relates generally to the automotive fields. When a vehicle is traveling, the ground clearance of the vehicle can change dynamically throughout the trip based on external and internal conditions of the vehicle. For example, with regard to external conditions, the vehicle may travel over speed bumps. Also, there may be objects on the road, or the vehicle may be traveling over uneven surfaces. With regard to internal conditions, a given vehicle may be carrying additional weight, thereby lowering the vehicle and reducing the ground clearance. Such additional weight may include extra cargo, passengers, etc. A smaller ground clearance increases the risk of the vehicle hitting any raised portion of the road such as speed bumps or objects on the road.

The present introduction is provided as background context only and is not intended to be limiting in any manner. It will be readily apparent to those of ordinary skill in the art that the concepts and principles of the present disclosure may be implemented in other applications and contexts equally.

### SUMMARY

The present disclosure relates to a system for providing adaptive ground clearance of a vehicle. As described in more detail herein, embodiments enable the system to identify objects on the road that may be too high for the ground clearance height of a vehicle. Using cameras to detect and measure such objects, the system automatically adjusts the ground clearance height of the vehicle in order to clear potentially hazardous objects. The system also alerts the driver of such objects.

In one illustrative embodiment, the present disclosure provides a computer-implemented method for providing adaptive ground clearance of a vehicle. The method includes: capturing data on an external environment using at least one camera positioned at an exterior portion of the vehicle, where the data on the external environment includes data on a ground surface on a path of the vehicle; detecting at least one object in the path of the vehicle based on the data that is captured; estimating an object height of the at least one object; and adjusting a ground clearance height of the vehicle based on an estimated object height of the at least one object in response to the estimated object height being greater than the ground clearance height of the vehicle such that an adjusted ground clearance height of the vehicle is greater than the estimated object height. Optionally, the data on the external environment includes light detection and ranging (Lidar) data. In some embodiments, the method further includes fetching crowdsourced data on potentially hazardous objects in the path of the vehicle. In some embodiments, the path of the vehicle is a predicted path. In some embodiments, the adjusting of the ground clearance height of the vehicle includes adjusting a suspension of the vehicle. In some embodiments, the adjusting of the ground clearance height of the vehicle includes adjusting a tire pressure of one or more tires of the vehicle. In some embodiments, the method further includes alerting a driver of the vehicle if one or more of the detected objects are potentially hazardous objects.

In another illustrative embodiment, the present disclosure provides an assembly for a vehicle, the assembly including: at least one camera positioned at an exterior portion of the vehicle; and a system including one or more processors and logic encoded in one or more non-transitory computer-readable storage media for execution by the one or more processors. The logic when executed is operable to cause the one or more processors to perform operations including: capturing data on an external environment using the at least one camera positioned at the exterior portion of the vehicle, where the data on the external environment includes data on a ground surface on a path of the vehicle; detecting at least one object in the path of the vehicle based on the data that is captured; estimating an object height of the at least one object; and adjusting a ground clearance height of the vehicle based on an estimated object height of the at least one object in response to the estimated object height being greater than the ground clearance height of the vehicle such that an adjusted ground clearance height of the vehicle is greater than the estimated object height. Optionally, the data on the external environment includes light detection and ranging (Lidar) data. In some embodiments, the logic when executed is further operable to cause the one or more processors to perform operations including fetching crowdsourced data on potentially hazardous objects in the path of the vehicle. In some embodiments, the path of the vehicle is a predicted path. In some embodiments, the adjusting of the ground clearance height of the vehicle includes adjusting a suspension of the vehicle. In some embodiments, the adjusting of the ground clearance height of the vehicle includes adjusting a tire pressure of one or more tires of the vehicle. In some embodiments, the logic when executed is further operable to cause the one or more processors to perform operations including alerting a driver of the vehicle if one or more of the detected objects are potentially hazardous objects.

In a further illustrative embodiment, the present disclosure provides a non-transitory computer-readable storage medium with program instructions stored thereon. The program instructions when executed by one or more processors are operable to cause the one or more processors to perform operations including: capturing data on an external environment using at least one camera positioned at an exterior portion of a vehicle, where the data on the external environment includes data on a ground surface on a path of the vehicle; detecting at least one object in the path of the vehicle based on the data that is captured; estimating an object height of the at least one object; and adjusting a ground clearance height of the vehicle based on an estimated object height of the at least one object in response to the estimated object height being greater than the ground clearance height of the vehicle such that an adjusted ground clearance height of the vehicle is greater than the estimated object height. Optionally, the data on the external environment includes light detection and ranging (Lidar) data. In some embodiments, the instructions when executed are further operable to cause the one or more processors to perform operations including fetching crowdsourced data on potentially hazardous objects in the path of the vehicle. In some embodiments, the path of the vehicle is a predicted path. In some embodiments, the adjusting of the ground clearance height of the vehicle includes adjusting a suspension of the vehicle. In some embodiments, the adjusting of the ground clearance height of the vehicle includes adjusting a tire pressure of one or more tires of the vehicle.

### BRIEF DESCRIPTION OF THE DRAWINGS

The present disclosure is illustrated and described with reference to the various drawings, in which like reference numbers are used to denote like assembly and/or system components and/or method steps, as appropriate.
FIG. 1 is a block diagram of an example environment for providing adaptive ground clearance of a vehicle.
FIG. 2 is a flow chart for providing adaptive ground clearance of a vehicle.
FIG. 3A is a block diagram of the example external environment, where the ground clearance of the vehicle is at a normal or default height.
FIG. 3B is a block diagram of the example external environment, where the ground clearance of the vehicle is increased.
FIG. 4 is a block diagram of an environment, showing a view toward the front interior of a vehicle.
FIG. 5 is a block diagram of an example network environment, which may be used for some implementations described herein.
FIG. 6 is a block diagram of an example computing system of the present disclosure.

### DETAILED DESCRIPTION

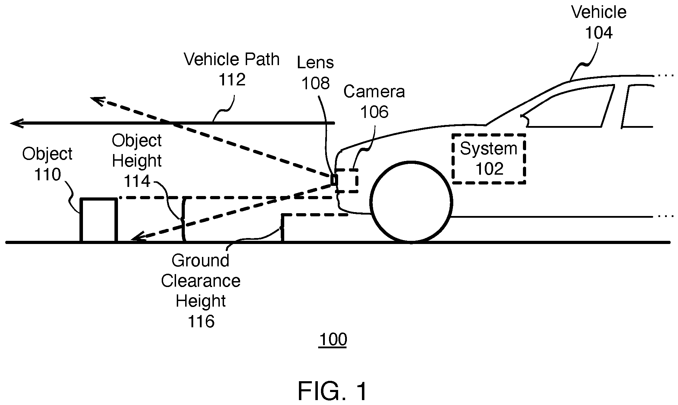

FIG. 1 is a block diagram of an example environment 100 or external environment 100 for providing adaptive ground clearance of a vehicle. As shown, the assembly for providing adaptive ground clearance includes a system 102 of a vehicle 104 and at least one camera 106 with a lens 108 positioned at an exterior portion of the vehicle. Being positioned at the exterior portion of the vehicle 104 means that at least one portion of the camera 106 (e.g., the lens 108) is exposed to the environment 100, or external environment 100. As such, the camera 106 captures various types of data on the external environment 100.

As described in more detail herein, the system 102 captures data on the external environment 100 using the camera 106 positioned at the exterior portion of the vehicle 104. For ease of illustration, one camera 106 is shown. In various embodiments, the system 102 may utilize multiple cameras and multiple types of cameras and sensors to capture data on the external environment 100. For example, the system may utilize light detection and ranging (Lidar) cameras and sensors to collect data. Such data may include data on objects on the road. For example, such objects may include bumps, trash, dead animals, rocks, etc. The data may include Lidar data and well as images. The images may be a continuous series of images, which may include video. For ease of illustration, the camera is 106 is shown positioned on the bumper of the vehicle 104. In various embodiments, the camera 106 and/or other cameras and sensors may also be positioned or mounted underneath the vehicle 104.

The camera 106 may be referred to as a client device, which may communicate with the system 102. Such communication may be facilitated via any suitable communication network (not shown) such as a wired network, a Bluetooth network, a Wi-Fi network, etc., or any combination thereof.

In various embodiments, the data on the external environment 100 includes data on a ground surface on a path of the vehicle, or vehicle path 112. The system 102 detects objects in the vehicle path 112 based on the data that is captured. The system 102 estimates an object height 114 of the object 110 based on the collected data.

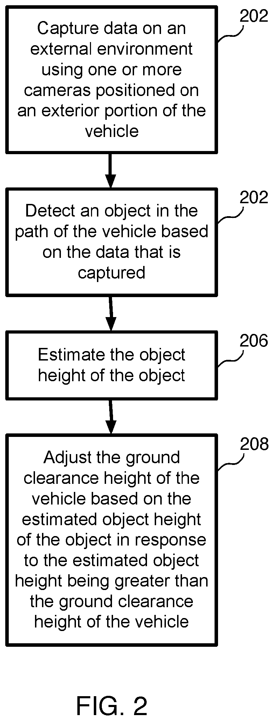

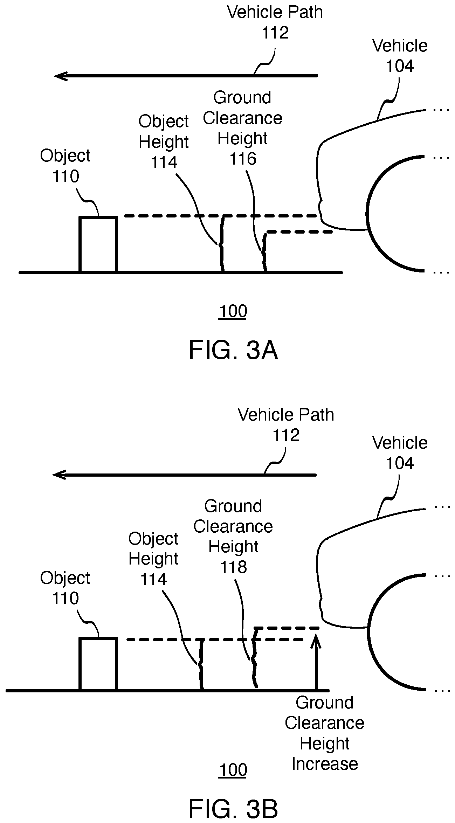

The system 102 then adjusts a ground clearance height 116 of the vehicle 104 as needed to clear the object 110 if the estimated object height 114 of the object 110 is greater than the ground clearance height 116. In this scenario, the system increases the ground clearance height 116 to be greater than the estimated object height 114. Further example embodiments directed to this process are described in more detail herein, in connection with FIGS. 2, 3A, and 3B.

For ease of illustration, FIG. 1 shows one block for each of the system 102 and the camera 106. Blocks 102 and 106 may represent multiple systems and cameras. In other implementations, environment 100 may not have all of the components shown and/or may have other elements including other types of elements instead of, or in addition to, those shown herein.

While system 102 performs implementations described herein, in other implementations, any suitable component or combination of components associated with system 102 or any suitable processor or processors associated with system 102 may facilitate performing the implementations described herein.

FIG. 2 is a flow chart for providing adaptive ground clearance of a vehicle. Referring to both FIGS. 1 and 2, a method is initiated at block 202, where a system such as system 102 captures data on the external environment 100 using the camera 106 positioned at the exterior portion of the vehicle 104. In various embodiments, the data on the external environment 100 includes data on a ground surface on the vehicle path. In various embodiments, the data on the external environment may include images and/or include Lidar data. The particular type of camera used for the camera 106 may vary and will depend on the particular implementation. Also, as indicated above, the camera 106 may represent multiple cameras, which may include different types of cameras.

At block 204, the system 102 detects at least one object in the vehicle path 112 based on the data that is captured. In various embodiments, the system fetches crowdsourced data on potentially hazardous objects in the path of the vehicle. For example, the system may fetch crowdsourced data from other drivers who report potentially hazardous objects on the road. The system may collect map data from the cloud and use global positioning system (GPS) technology to determine where the vehicle is located on a given road that has a reported hazardous object.

In various embodiments, the system may use artificial intelligence (AI) and machine learning to track known objects that could cause damage to a vehicle on specific roads or parking areas. Such objects may include permanently placed objects such as speed bumps, as well as high curb transitions between a parking lot or driveway and a road.

In various embodiments, the vehicle path 112 is a predicted path. In various embodiments, the system may predict the vehicle path 112 based on one or more techniques. For example, in various embodiments, the system may collect map data from the cloud and use GPS technology to determine where the vehicle is located on a given road and determine the vehicle path 112 based on the map and GPS position of the vehicle.

In various embodiments, the system may predict the vehicle path 112 based on the road that the camera 106 detects. For example, the system may detect road indicators (e.g., road lines, road signs, etc.) to predict the vehicle path 112. In some embodiments, the system may use AI and machine learning to determine the vehicle path 112 based on images of the shape of the road that the camera 106 captures ahead of the vehicle 104.

In various embodiments, the system may also predict the vehicle path 112 based on real-time steering wheel activity. The system may determine the rotational position of the steering wheel of the vehicle 104 and if the steering wheel is rotating. The system may then predict the vehicle path 112 based on this information. For example, if the steering wheel is positioned such that the vehicle wheels are positioned to travel straight ahead and the steering wheel is not turning, the system may predict the vehicle path 112 to be directly straight ahead at that moment. If the system determines that steering wheel is rotated either to the left or to the right to a particular degree, the system may predict the vehicle path 112 is curving to a corresponding amount toward the corresponding direction to the left or to the right, accordingly. In various embodiments, the system may also determine the rate that the steering wheel is rotating and then predict the curvature of the vehicle path 112 based on the rotational rate of the steering wheel.

FIG. 3A is a block diagram of the example external environment 100, where the ground clearance of the vehicle 104 is at a normal or default height. The scenario shown in FIG. 3A is similar to that of FIG. 1, where the object height 114 of the object 110 is greater than that ground clearance height 116 of the vehicle 104. In this scenario, as the vehicle 104 continues on the vehicle path 112 toward the object 110, the vehicle will hit the object 110, because the ground clearance height 116 is not high enough to clear the object 110. For ease of illustration, the camera 106 and the system 102 are not shown.

At block 206, the system 102 estimates the object height 114 of the object 110. The system may use Lidar techniques to estimate the object height 114. As shown and indicated above, the object height 114 of the object 11 is greater than that ground clearance height 116 of the vehicle 104. The system estimates the object height 114 in order to compare the object height 114 to the current ground clearance height 116 of the vehicle 104. If the object height 114 is less than the current ground clearance height 116, the system need not adjust the ground clearance height 116. If the object height 114 is greater than the current ground clearance height 116, the system needs to adjust the ground clearance height 116. If the system needs to adjust the ground clearance height 116, the system determines how high to adjust the ground clearance height 116 based on the object height 114.

At block 208, the system 102 adjusts the ground clearance height 116 of the vehicle 104 based on the estimated object height 114 of the object 110. As indicated above, the system adjusts the ground clearance height 116 in response to the estimated object height 114 being greater than the ground clearance height 116. Example embodiments directed to adjusting the ground clearance height 116 of the vehicle 104 are described in more detail below in connection with FIG. 3.

FIG. 3B is a block diagram of the example external environment 100, where the ground clearance of the vehicle 104 is increased. The scenario shown in FIG. 3B differs from the scenario shown in FIG. 3A in that ground clearance height 116, as shown in FIG. 3A, is increased to a higher ground clearance height 118, as shown in FIG. 3B. As such, the adjusted ground clearance height 118 of the vehicle 104 is greater than the estimated object height 110. As a result, in this scenario, as the vehicle 104 continues on the vehicle path 112 toward the object 110, the vehicle will not hit the object 110, because the ground clearance height 118 is sufficiently high to clear the object 110.

In various embodiments, the system adjusts the ground clearance height of the vehicle 104 by adjusting the suspension of the vehicle. In some embodiments, the vehicle may have air suspension, which the system adjusts. The particular type of suspension that the system adjust may vary, depending on the particular implementation. For example, the suspension may involve rubber springs, rigid or leaf springs, control arms, multilinks, torsion beams, struts/coil springs, etc.

In various embodiments, the system adjusts the ground clearance height of the vehicle 104 by adjusting a tire pressure of one or more tires of the vehicle. To raise the ground clearance height, the system may increase the tire pressure of one or more of the tires of the vehicle. Raising the tire pressure inflates the one or more tires, thereby raising the ground clearance height of the vehicle 104.

In various embodiments, the system may adjust just the air suspension, just the tire pressures of one or more tires, or a combination thereof. Also, after the object 110 is cleared, the system automatically returns the ground clearance height 118 back to its normal or default ground clearance height 116.

Although the steps, operations, or computations may be presented in a specific order, the order may be changed in particular implementations. Other orderings of the steps are possible, depending on the particular implementation. In some particular implementations, multiple steps shown as sequential in this specification may be performed at the same time. Also, some implementations may not have all of the steps shown and/or may have other steps instead of, or in addition to, those shown herein.

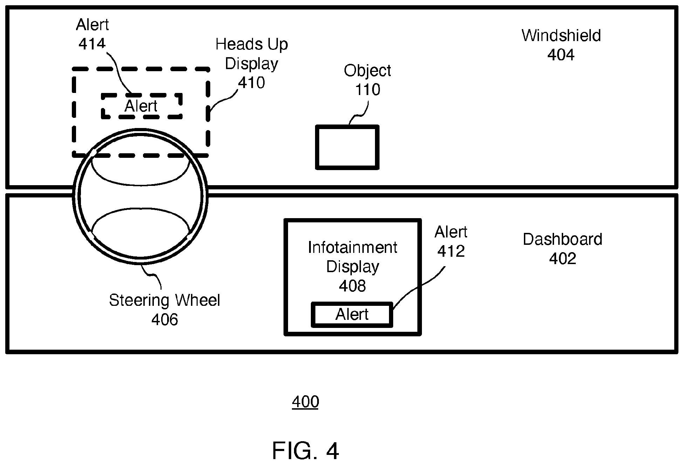

FIG. 4 is a block diagram of an environment 400, showing a view toward the front interior of a vehicle. This portion of the vehicle shown may be that of the vehicle 104 shown in FIGS. 1, 3A, and 3B. Shown is a dashboard 402, a windshield 404, a steering wheel 406, an infotainment display 408, a heads up display 410, and the object 110. In this scenario, the object 110 is visible through the windshield 404. The height of the object 110 may not be apparent to driver. In other words, even if the drive sees the object 110, the driver may not be able to tell if the ground clearance height of the vehicle will clear the object 110.

As indicated above, the system increases the ground clearance height of the vehicle in order to clear the object 110. The system estimates the height of the object 110, as described herein. For example, in various embodiments, the system may use Lidar techniques to estimate the object height 114. In some scenarios, the height of the object 110 may be too high for the maximum height that the system could increase the ground clearance height.

In various embodiments, the system also calculates the time of impact of the object 110 based on an estimated distance between the vehicle and the object 110 and based on the speed of the vehicle in order to determine whether this is sufficient time to increase the ground clearance height. In various embodiments, the system may use Lidar techniques to estimate the distance between the object 110 and the vehicle. In some scenarios, the system might not have sufficient time to increase the ground clearance height soon enough, before the vehicle reaches the object 110.

In either of these scenarios, wherein the maximum adjusted ground clearance height and/or the distance between the vehicle and the object is insufficient, the system alerts the driver of the vehicle if one or more of the detected objects are potentially hazardous objects. The system may display an alert 412 in the infotainment display 408 and/or in the heads up display 410 to alert the driver of the object 110 as a hazard on the road. In some embodiments, the system may also sound an audible alarm to alert the driver. As such, the driver may slow down and turn to avoid hitting the object 110. In some embodiments, even if the system is able to adjust the ground clearance height to a safe position, the system may still alert the driver as least so that the driver is aware of what is happening. Also, if the driver knows of the potentially hazardous object, the driver may wish to slow down the vehicle anyway.

As indicated above, the system may track known objects that could cause damage to a vehicle on specific roads or parking areas, wherein such objects may include permanently placed objects such as speed bumps, as well as high curb transitions between a parking lot or drive way and a road. In such situations, the system may alert the driver or suggest alternative routes to avoids such permanent objects.

In some embodiments, and in these scenarios, the system may implement automatic evasive actions, such as automatically breaking to slow down or halt the vehicle. The system may also take control of the steering of the vehicle to automatically drive around the object 110. In this case of automatically driving around the object 110, the system may also determine that the external environment is safe to drive around the object 110. For example, before driving around the object 110, the system may first determine that there are no other cars to the side of the vehicle that the vehicle may hit.

Embodiments described herein have numerous benefits. For example, embodiments automatically adjust the ground clearance height of a vehicle to avoid potentially hazardous objects in the vehicle path. Embodiments also warn the driver of such potentially hazardous objects whether or not the system automatically takes evasive actions.

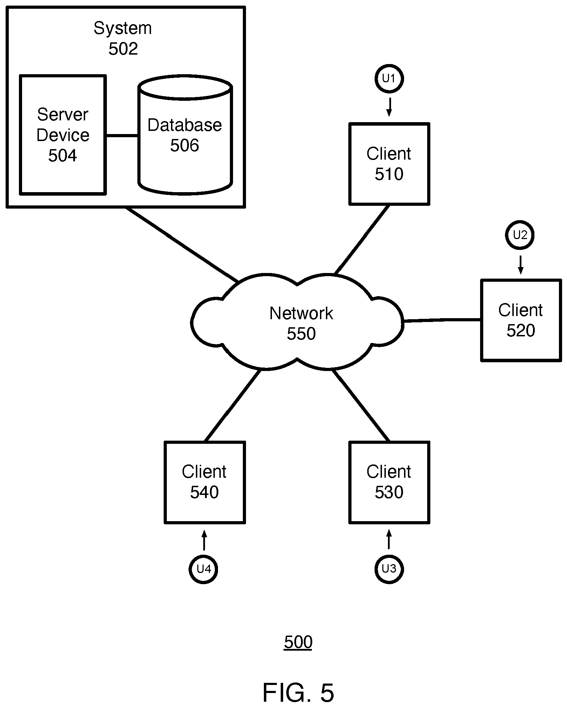

FIG. 5 is a block diagram of an example network environment 500 of the present disclosure. In some implementations, network environment 500 includes a system 502, which includes a server device 504 and a database 506. In various implementations, system 502 may be used to implement system 102 of FIG. 1, as well as to perform implementations described herein. Network environment 500 also includes client devices 510, 520, 530, and 540, which may communicate with system 502 and/or may communicate with each other directly or via system 502. Network environment 500 also includes a network 550 through which system 502 and client devices 510, 520, 530, and 540 communicate. Network 550 may be any suitable communication network such as a Wi-Fi network, Bluetooth network, the Internet, etc.

For ease of illustration, FIG. 5 shows one block for each of system 502, server device 504, and network database 506, and shows four blocks for client devices 510, 520, 530, and 540. Blocks 502, 504, and 506 may represent multiple systems, server devices, and network databases. Also, there may be any number of client devices. In other implementations, environment 500 may not have all of the components shown and/or may have other elements including other types of elements instead of, or in addition to, those shown herein.

While server device 504 of system 502 performs implementations described herein, in other implementations, any suitable component or combination of components associated with system 502 or any suitable processor or processors associated with system 502 may facilitate performing the implementations described herein.

In the various implementations described herein, a processor of system 502 and/or a processor of any client device 510, 520, 530, and 540 cause the elements described herein (e.g., information, etc.) to be displayed in a user interface on one or more display screens.

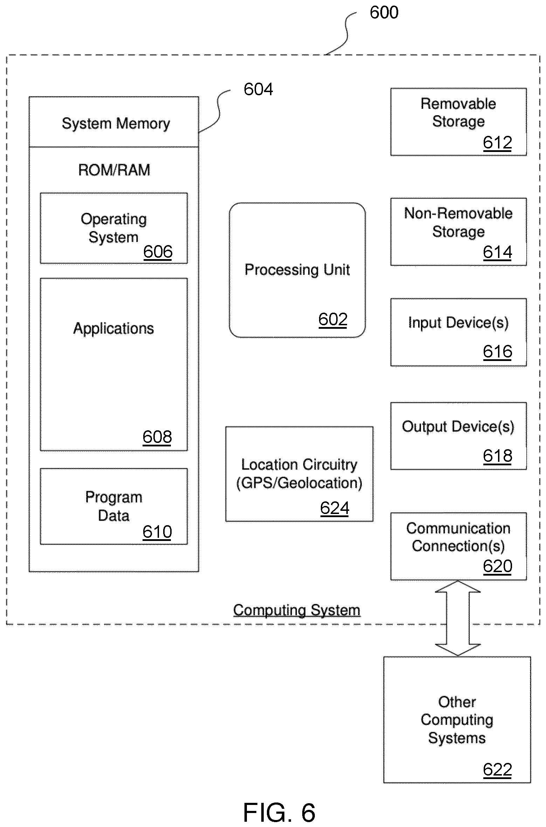

FIG. 6 is a block diagram of an example computing system 600 of the present disclosure. The computing system 600 may be used to implement the server system 502 of FIG. 5 and/or the system 102 of FIG. 1, as well as to perform implementations described herein.

The computing system 600 typically includes at least one processing unit 602 and a system memory 604. Depending on the particular configuration and type of computing device, the system memory 604 may be volatile such as random-access memory (RAM), non-volatile such as read-only memory (ROM), flash memory, and the like, or some combination of volatile memory and non-volatile memory. The system memory 604 typically maintains an operating system 606, one or more applications 608, and program data 610. The operating system 606 may include any number of operating systems executable on desktops or portable devices including, but not limited to, Linux, Microsoft Windows^{®}, Apple OS^{®}, or Android^{®}.

The computing system 600 may also have additional features or functionality. For example, the computing system 600 may also include additional data storage devices (removable and/or non-removable) such as, for example, magnetic disks, optical disks, tape, or flash memory. Such additional storage may include removable storage 612 and non-removable storage 614. Computer storage media may include volatile and non-volatile, removable and non-removable media implemented in any method or technology for storage of information, such as computer-readable instructions, data structures, program modules or other data. The system memory 604, the removable storage 612, and the non-removable storage 614 are all examples of computer storage media. Available types of computer storage media include, but are not limited to, RAM, ROM, EEPROM, flash memory (in both removable and non-removable forms) or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the computing system 600. Any such computer storage media may be part of the computing system 600.

The computing system 600 may also have input device(s) 616 such as a keyboard, mouse, pen, voice input device, touchscreen input device, etc. Output device(s) 618 such as a display, speakers, printer, short-range transceivers such as a Bluetooth transceiver, etc., may also be included. The computing system 600 also may include one or more communication connections 620 that allow the computing system 600 to communicate with other computing systems 622, such as over a wired or wireless network or via Bluetooth (a Bluetooth transceiver may be regarded as an input/output device and a communications connection). The one or more communication connections 620 are an example of communication media. Available forms of communication media typically carry computer-readable instructions, data structures, program modules or other data in a modulated data signal such as a carrier wave or other transport mechanism and include any information delivery media. The term "modulated data signal" may include a signal that has one or more of its characteristics set or changed in such a manner as to encode information in the signal. By way of illustrative example only and not of limitation, communication media may include wired media such as a wired network or direct-wired connection, and wireless media such as acoustic, radio frequency (RF), infrared and other wireless media. The term computer-readable media as used herein includes both storage media and communication media.

The computing system 600 may also include location circuitry 624. In various embodiments, the location circuitry 624 may include circuitry including global positioning system (GPS) circuitry and/or geolocation circuitry. The location circuitry 624 may automatically discern its location based on relative positions to multiple GPS satellites and/or triangulation using cellular carrier network(s) and/or IEEE Standard 802.11 wireless (Wi-Fi) networks (collectively referred to as "geolocation services") to determine location based on multiple cellular communications facilities and/or multiple Wi-Fi networks. The location circuitry 624, including GPS circuitry and/or geolocation circuitry, is frequently incorporated in smartphones and many other tablets or other portable devices. In various embodiments, computing system 600 may not have all of the components shown and/or may have other elements including other types of components instead of, or in addition to, those shown herein.

Although the present disclosure is illustrated and described herein with reference to illustrative embodiments and specific examples provided, it will be readily apparent to those of ordinary skill in the art that other embodiments and examples may perform similar functions and/or achieve like results. All such equivalent embodiment and examples are within the spirit and scope of the present disclosure and are intended to be covered by the following non-limiting claims for all purposes.

## Claims

1. A computer-implemented method for providing adaptive ground clearance of a vehicle (104), the method comprising:
capturing (202) data on an external environment using at least one camera positioned at an exterior portion of the vehicle, wherein the data on the external environment comprises data on a ground surface on a path of the vehicle;
detecting at least one object (110) in the path of the vehicle based on the data that is captured;
estimating (206) an object height (114) of the at least one object; and
adjusting (208) a ground clearance height (116) of the vehicle based on an estimated object height of the at least one object in response to the estimated object height being greater than the ground clearance height of the vehicle such that an adjusted ground clearance height of the vehicle is greater than the estimated object height.

2. The method of claim 1, wherein the data on the external environment comprises light detection and ranging (Lidar) data.

3. The method of any of the preceding claims , further comprising fetching crowdsourced data on potentially hazardous objects in the path of the vehicle (112).

4. The method of any of the preceding claims, wherein the path of the vehicle (112) is a predicted path.

5. The method of any of the preceding claims, wherein the adjusting of the ground clearance height of the vehicle comprises adjusting a suspension of the vehicle and/or adjusting a tire pressure of one or more tires of the vehicle.

6. The method of any of the preceding claims, further comprising alerting a driver of the vehicle if one or more of the detected objects are potentially hazardous objects.

7. An assembly for a vehicle, the assembly comprising:
at least one camera (106) positioned at an exterior portion of the vehicle; and
a system comprising one or more processors and logic encoded in one or more non-transitory computer-readable storage media for execution by the one or more processors and when executed operable to cause the one or more processors to perform operations comprising:
capturing (202) data on an external environment using the at least one camera positioned on the exterior portion of the vehicle, wherein the data on the external environment comprises data on a ground surface on a path of the vehicle;
detecting at least one object in the path of the vehicle based on the data that is captured;
estimating (206) an object height of the at least one object; and
adjusting (208) a ground clearance height of the vehicle based on an estimated object height of the at least one object in response to the estimated object height being greater than the ground clearance height of the vehicle such that an adjusted ground clearance height of the vehicle is greater than the estimated object height.

8. The assembly of claim 7, wherein the data on the external environment comprises light detection and ranging (Lidar) data.

9. The assembly of any of claims 7-8, wherein the logic when executed is further operable to cause the one or more processors to perform operations comprising fetching crowdsourced data on potentially hazardous objects in the path of the vehicle.

10. The assembly of any of claims 7-9, wherein the path of the vehicle is a predicted path.

11. The assembly of any of claims 7-10, wherein the adjusting of the ground clearance height of the vehicle comprises adjusting a suspension of the vehicle and/or adjusting a tire pressure of one or more tires of the vehicle.

12. The assembly of any of claims 7-11, wherein the logic when executed is further operable to cause the one or more processors to perform operations comprising alerting a driver of the vehicle if one or more of the detected objects are potentially hazardous objects.

13. A non-transitory computer-readable storage medium with program instructions stored thereon, the program instructions when executed by one or more processors are operable to cause the one or more processors to perform operations comprising:
capturing (202) data on an external environment using at least one camera positioned at an exterior portion of a vehicle, wherein the data on the external environment comprises data on a ground surface on a path of the vehicle;
detecting at least one object in the path of the vehicle based on the data that is captured;
estimating (206) an object height of the at least one object; and
adjusting (208) a ground clearance height of the vehicle based on an estimated object height of the at least one object in response to the estimated object height being greater than the ground clearance height of the vehicle such that an adjusted ground clearance height of the vehicle is greater than the estimated object height.

14. The computer-readable storage medium of claim 13, wherein the data on the external environment comprises light detection and ranging (Lidar) data.

15. The computer-readable storage medium of claim 13, wherein the instructions when executed are further operable to cause the one or more processors to perform operations according to any of claims 3-6.
